# EUROPÄISCHE PATENTANMELDUNG

(11) **EP 2 336 018 A1**
(43) Veröffentlichungstag der Anmeldung: **22.06.2011**
(21) Anmeldenummer: 09179958.5
(22) Anmeldetag: 18.12.2009
(51) Int. Cl.: B63B 35/79, B29C 70/22, A63B 49/12, C08G 18/48, C08G 18/76

(54) **Sportgerät enthaltend ein Polyurethanverbundsystem**

(71) Anmelder: Felix, Florian, 82467 Garmisch-Partenkirchen (DE)
(72) Erfinder: Felix, Florian, 82467, Garmisch-Partenkirchen (DE); Prissok, Frank, 49448, Lemförde (DE); Balbo Block, Marco, 49074, Osnabrück (DE)
(74) Vertreter: Best, Michael

(57) **Zusammenfassung**

Die vorliegende Erfindung betrifft ein Sportgerät, enthaltend ein Polyurethanverbundsystem, enthaltend einen Polyurethanhartschaumstoff und ein Beschichtungsmittel aus einem kompakten Polyurethan oder einem kompakten Polyharnstoff, wobei der Polyurethanhartschaumstoff ein Verstärkungsmittel enthält.

## Beschreibung

Die vorliegende Erfindung betrifft ein Sportgerät, enthaltend ein Polyurethanverbundsystem, enthaltend einen Polyurethanhartschaumstoff und ein Beschichtungsmittel aus einem kompakten Polyurethan oder einem kompakten Polyharnstoff, wobei der Polyurethanhartschaumstoff ein Verstärkungsmittel enthält. Weiter betrifft die vorliegende Erfindung ein Verfahren zur Herstellung des Sportgeräts sowie die Verwendung des Polyurethanverbundsystems in Sportgeräten.

In vielen Bereichen sind Verbundkörper auf Basis von einem Polyurethanhartschaumstoff, der mit einem Beschichtungsmaterial beschichtet ist, bekannt. Die Beschichtung erfolgt üblicherweise in der Art, dass mittels Polyurethanhartschaum ein vorgefertigtes Gehäuse ausgeschäumt wird oder ein Polyurethanhartschaumstoff produziert wird, der anschließend mit einer Deckschicht verbunden wird. Diese werden im ersten Fall beispielsweise als Stoßfänger im Automobil oder als Kühlboxen bzw. Kühlschrankgehäuse eingesetzt, im zweiten Fall, mit einer Beschichtung aus lackierten Metallblechen, als Fassadenverkleidung eingesetzt. Ein großer Vorteil dieser niederdichten Verbundmaterialien ist deren geringes Gewicht, verbunden mit einer gewissen mechanischen Stabilität. Ein weiterer Vorteil ist die individualität des Werkstoffs. So kann der gewünschte Gegenstand aus einem Block Polyurethanhartschaumstoff individuell hergestellt werden und anschließend mit einer Beschichtung versehen werden.

Nachteilig an niederdichten Schaummaterialien sind deren geringe Druckfestigkeit, geringe Schlagzähigkeit sowie eine nur mäßige Kernsteifigkeit und geringe Biegefestigkeit. Wenn eine hohe Steifigkeit und Druckfestigkeit und gleichzeitig ein geringes Gewicht des Materials benötigt wird, beispielsweise für Sportgeräte, wie Surfbretter, Wintersportgeräte, kleine Sportboote oder Tennisschläger, werden die Polyurethanhartschaumstoffe durch Versteifungsmittel versteift. Dabei handelt es sich beispielsweise um Teile aus Holz oder Metall sowie durch mit Harz verstärkte Glasfasermatten. Diese Verstärkungsteile werden beispielsweise in gefräste Vertiefungen im Polyurethanhartschaumstoff eingelegt oder auf dessen Oberfläche aufgebracht. So werden Surfbretter typischerweise durch einen "Stringer", ein Holzbrett, normalerweise Balsaholz, der in eine geschnittene oder gefräste Vertiefung in dem Kern des Surfbretts eingeklebt wird, versteift. Zwar wird durch den Einsatz des "Stringer" die Biegung des Surfbretts weitgehend verhindert, jedoch neigen derartige Surfbretter immer noch stark zur Verdrehung in Längsachse.

Zur weiteren Verbesserung der Steifigkeit sowie zur Verbesserung der Druckfestigkeit wird die Oberfläche der Polyurethanhartschaumstoffe mit kompakten Beschichtungsmaterialien belegt. Bei diesen Beschichtungen kann es sich um inflexible, hochsteife Materialien wie Metall oder Polystyrolplatten oder um teilflexible Materialien, wie mehrere Lagen aus mit Epoxydharz getränkten Glasfasermatten handeln. Um eine Oberfläche mit hoher Oberflächengüte zu erhalten, muss jede Lage der mit Epoxydharz getränkten Glasfasermatten nach dem Trocknen abgeschliffen werden. Nach Aufbringen von meist 2 bis 3 Lagen Glasfasermatten werden diese plangeschliffen, lackiert, erhalten ggf. einen Designdruck und ein Klarlackfinish, sowie ggf. Trittflächen, Griffe und Befestigungselemente. Dieses Verfahren ist sehr zeit- und arbeitsaufwendig und durch die Verwendung von Einlegern und der Beschichtung durch mehrere Lagen aus mit Epoxydharz getränkten Glasfasermatten wird der Vorteil des geringen Gewichts des Verbundkörpers teilweise wieder zunichte gemacht. Desweiteren ist Epoxidharz relativ teuer.

Weiter bekannt sind beschichtete Polyurethanspritzschaumstoffe aus einem Polyurethanhartschaumstoff, der ein Kurzfasermaterial als Verstärkungsmittel enthält, und einer Polyharnstoffbeschichtung. Diese Verbundsysteme werden hergestellt, indem mindestens eine Komponente der Reaktionsmischung zur Herstellung des Polyurethanhartschaumstoffs das Verstärkungsmittel bereits vor dem Vermischen enthält oder indem das Verstärkungsmittel zusammen mit Reaktionsmischung in eine Form sprüht. Solche Verbundstoffe sind beispielsweise in US 2002/0137871 oder US 2008/299372 beschrieben. Nachteilig an diesen Verbundstoffen ist, dass nur geringe Verbesserungen der mechanischen Eigenschaften, insbesondere der Biegefestigkeit, erhalten werden. Weiter ist man bei der Herstellung an die Gestalt der Form gebunden und somit ist keine individuelle Formgestaltung des Verbundkörpers möglich ist.

US 2008/0287017 A1 offenbart ein Surfbrett, das anstelle des "Stringers" aussen aufgebrachte Kohlefasern als Verstärkung aufweist. Der Kern des Surfbretts bleibt aber unverstärkt.

Aufgabe der vorliegenden Erfindung war es, ein Sportgerät, insbesondere ein Wassersportgerät oder ein Racketsportgerät zur Verfügung zu stellen, das eine ausgezeichnete Steifigkeit, Schlagzähigkeit und Druckfestigkeit bei geringerem Gesamtgewicht aufweist und einfach und kostengünstig herzustellen ist. Eine weitere Aufgabe war es, ein Verfahren zu liefern, das flexible Variationen der Endform/Gestaltungsform des Sportgeräts erlaubt.

Die erfindungsgemäße Aufgabe wird gelöst durch ein Sportgerät auf Basis eines Polyurethanverbundsystems, enthaltend einen Polyurethanhartschaumstoff und ein Beschichtungsmittel aus einem kompakten Polyurethan oder einem kompakten Polyharnstoff, wobei der Polyurethanhartschaumstoff ein poröses, dreidimensionales Verstärkungsmittel, das ein Netzwerk ausbildet, wobei das Netzwerk mindestens 50 % des Volumens des Polyurethanshartschaumstoffs umschließt oder mindestens zwei Lagen eines porösen, mindestens zweidimensionalen Verstärkungsmittels enthält. Dabei sind die Lagen bevorzugt homogen im Schaumstoff verteilt. Homogen verteilt bedeutet in diesem Zusammenhang, dass sich der maximale Abstand zweier benachbarter Lagen untereinander bzw. der oberen Lage von der Oberseite des Schaumstoffs bzw. der unteren Lage von der unteren Seite des Schaumstoffs von dem minimalen Abstand zweier benachbarter Lagen untereinander bzw. der oberen Lage von der Oberseite bzw. der unteren Lage von der Unterseite um nicht mehr als den Faktor 2, bevorzugt nicht mehr als den Faktor 1,5 voneinander unterscheidet.

Erfindungsgemäß handelt es sich bei dem Sportgerät bevorzugt um ein Wassersportgerät oder ein Racketsportgerät. Ein Wassersportgerät ist eine Vorrichtung, welche auf oder im Wasser gleitend fortbewegt werden kann. Insbesondere ist ein Wassersportgerät ein Surfbrett, Windsurfbrett, Kiteboard, Wakeboard oder ein Wasserski. Bevorzugt werden erfindungsgemäß Surfbretter.

Ein Racketsportgerät ist insbesondere ein Tennisschläger, Badmintonschläger, Racketballschläger, Squashschläger oder Paddleschläger. Bevorzugt werden erfindungsgemäß Tennisschläger.

Das erfindungsgemäße Sportgerät enthält das Polyurethanverbundsystem, bevorzugt besteht es im Wesentlichen aus dem Polyurethanverbundsystem. "Besteht im Wesentlichen aus dem Polyurethanverbundsystem" bedeutet im Zusammenhang mit dem erfindungsgemäßen Sportgerät, dass das Sportgerät bis auf konstruktionsbedingte Ergänzungen wie Halteösen, Beschichtungen, Trittflächen und/oder Durchbohrungen, bzw. wie bei Racketsportgeräten üblich, durch eine Bespannung, Beschichtung oder durch Ergänzung eines Griffs, sonst aus dem Polyurethanverbundsystem besteht. So wird hierunter insbesondere verstanden, dass bei dem Wassersportgerät, insbesondere bei dem Surfbrett, der Verdrängungskörper im Wesentlichen aus dem Polyurethanverbundsystem besteht, bis auf Beschichtungen, Halteösen, Durchbohrungen und/oder Ausfräsungen zur Ergänzung von beispielsweise Finnen und das Racketsportgerät, insbesondere der Tennisschläger, bis auf Bespannung, Beschichtung und/oder Ergänzung eines Griffs aus dem Polyurethanverbundsystem besteht.

Der im Polyurethanverbundsystem verwendete verstärkte Hartschaum weist bevorzugt eine dichteunabhängige Druckfestigkeit von mindestens 5 * 10⁻⁴ MPa*(L/g)^{1,6}, insbesondere mindestens 5,5 * 10⁻⁴ MPa*(L/g)^{1,6} und bevorzugt ein dichteunabhängiges Druck-E-Modul von mindestens 8 * 10⁻³ MPa*(L/g)^{1,7}, insbesondere mindestens 9,5 * 10⁻³ MPa/(L/g)^{1,7} auf. Die dichteunabhängige Druckfestigkeit wurde gemäß Druckfestigkeit * (Dichte)^{-1,6} und das dichteunabhängige Druck-E-Modul gemäß Druck-E-Modul * (Dichte)^{-1,7} berechnet. Dies bedeutet für einen im Polyurethanverbundsystem verwendeten verstärkten Hartschaum bei einer Schaumdichte von 45 g/L eine bevorzugte Druckfestigkeit von mindestens 0,2 MPa, mehr bevorzugt mindestens 0,25 MPa und ein bevorzugtes Druck-E-Modul von mindestens 5 MPa, mehr bevorzugt mindestens 6 MPa. Des Weiteren weist der Hartschaum bei einer Dichte von 45 g/L typischerweise eine Biegefestigkeit von mindestens 0,4 MPa, vorzugsweise mindestens 0,5 MPa auf. Das erfindungsgemäße Polyurethanverbundsystem weist bei einer Schaumdichte von 45 g/L und einer Schichtdicke des Beschichtungsmaterials von 1 mm eine Oberflächenhärte von typischerweise mindestens 400 N, vorzugsweise mindestens 500 N auf. Dabei weist der erfindungsgemäß verwendete verstärkte Polyurethanhartschaumstoff typischerweise eine Dichte von 30 g/L bis 500 g/L, bevorzugt 40 g/L bis 400 g/L, besonders bevorzugt 40 g/L bis 300 g/L, insbesondere 40 g/L bis 200 g/L auf, bzw. 40 g/L bis 100 g/L, wie z.B. etwa 40 g/L bis 60 g/L.

Als porös werden die Verstärkungsmittel im Rahmen der vorliegenden Erfindung bezeichnet, wenn die Reaktionsmischung zur Herstellung des Polyurethanhartschaumstoffs in das Verstärkungsmittel eindringen und dieses durchdringen und im Wesentlichen vollständig benetzen kann. Dabei bildet das Verstärkungsmittel zweidimensionale oder dreidimensionale Netzwerke in dem Polyurethanhartschaumstoff des Polyurethanverbundsystems aus. Die das Netzwerk bildenden Materialien, beispielsweise Fasern, Vliese, Matten, Rovings oder Bänder sind vorzugsweise miteinander verbunden, beispielsweise durch Verschlaufungen oder Verknüpfungen, beispielsweise zwischen den Matten. Zur Bildung von dreidimensionalen Netzwerken können mehrere zweidimensionale Verstärkungsmittel verknüpft werden und/oder dreidimensionale Verstärkungsmittel wie Faserstränge, die gegebenenfalls verdrillt oder verflochten sind, wie z.B. Faserzöpfe, vorzugsweise aus Glasfasern, eingesetzt werden. Als bevorzugtes poröses dreidimensionales Verstärkungsmittel wird ein dreidimensionales, beispielsweise ein- oder mehrschichtiges Fasergelege, bevorzugt aus Glasfasern, z.B. ein Glasfaserzopfgelege oder mehrschichtiges Glasfilamentgelege eingesetzt. Die Verstärkungsmittel können beispielsweise aus Glasfasern, Aramidfasern, Kohlefasern oder Fasern aus Kunststoff bestehen, bevorzugt sind Glasfasern. Auch ist es möglich, dass die Verstärkungsstoffe aus einer Kombination dieser Werkstoffe bestehen. So kann beispielsweise ein dreidimensionales Verstärkungsmittel aus zwei Glasfasermatten bestehen, die durch Polyamidfasern verbunden sind. Bevorzugt besteht das Verstärkungsmittel nur aus Glasfasern. Das zweidimensionale Verstärkungsmittel wird bevorzugt in mindestens zwei Lagen eingesetzt. Um zu erreichen, dass das dreidimensionale Netzwerk mindestens 50 % des Volumens des Polyurethanhartschaumstoffs umschließt, wird bevorzugt ein dreidimensionales Verstärkungsmittel eingesetzt.

Solche zwei- oder dreidimensionalen Netzwerke werden beispielsweise durch den Einsatz von Gelegen, Geweben oder Gewirken auf Basis von Fasern erhalten. Solche zweidimensionalen Verstärkungsmittel sind vorzugsweise Fasermatten, wie beispielsweise Textil-, Glasfaser- oder Kohlefasermatten oder Bänder, bevorzugt Glasfasermatten, beispielsweise Unifilo® U801 oder U809 der Firma Owens Corning Vetrotex. Dabei sollte die Porosität des Verstärkungsmaterials so ausgeprägt sein, dass die Reaktionsmischung zur Herstellung des Polyurethanhartschaumstoffs in der Lage ist, das Verstärkungsmittel zu durchdringen und dessen Oberfläche im Wesentlichen vollständig zu benetzen. Der Anteil des Verstärkungsmittels beträgt vorzugsweise 5 bis 40 Gewichtsprozent, insbesondere 10-20 Gewichtsprozent, bezogen auf das Gesamtgewicht des harten Polyurethanschaumstoffs einschließlich Verstärkungsmittel.

Der Polyurethanhartschaumstoff des Polyurethanverbundsystems, das in Sportgeräten der vorliegenden Erfindung eingesetzt wird, enthält in einer Ausführungsform ein poröses dreidimensionales Verstärkungsmittel, das ein Netzwerk ausbildet. Das Netzwerk umschließt mindestens 50 % des Volumens des Polyurethanhartschaumstoffs, vorzugsweise mindestens 60 %, mehr bevorzugt mindestens 75 %, insbesondere mindestens 90 %, beispielsweise mindestens 95 % des Volumens des Polyurethanhartschaumstoffs bzw. umfasst im Wesentlichen das Volumen des Polyurethanhartschaumstoffs. Unter Volumen des Polyurethanhartschaumstoffs wird bevorzugt der Raum, insbesondere der zusammenhängende Raum, verstanden, der durch den Polyurethanhartschaumstoff ausgefüllt wird. Typischerweise handelt es sich um einen einzelnen zusammenhängenden Raum.

Vorzugsweise wird der Poiyurethanhartschaumstoff des erfindungsgemäßen Sportgeräts erhalten durch Vermischen von (a) Isocyanaten, (b) Verbindungen mit gegenüber Isocyanaten reaktiven Gruppen, (c) Treibmittel, enthaltend Wasser, (d) Katalysatoren und gegebenenfalls (e) weiteren Additiven, so dass eine Reaktionsmischung erhalten wird, Auftragen der Reaktionsmischung auf ein Verstärkungsmittel und Aushärten der Reaktionsmischung. Dazu werden typischerweise die Lagen des Verstärkungsmittels vorgelegt und die Polyurethanreaktionsmischung auf diese Lagen des Verstärkungsmittels aufgetragen. Die Reaktionsmischung durchtränkt das Verstärkungsmittel im Wesentlichen vollständig. Durch die Treibreaktion der Polyurethanreaktionsmischung werden die verschiedenen Lagen des zweidimensionalen bzw. das Netzwerk des dreidimensionalen Verstärkungsmittels homogen im Schaum verteilt, d.h. durch die Treibreaktion der Polyurethanreaktionsmischung wird das von dieser im Wesentlichen vollständig durchtränkte Verstärkungsmittel so aufgebläht und verstreckt, dass das Netzwerk, das durch das dreidimensionale Verstärkungsmittel gebildet wird, mindestens 50 % des Volumens des Polyurethanhartschaumstoffs umschließt.

Als Isocyanate (a) können alle gewöhnlichen aliphatischen, cycloaliphatischen und bevorzugt aromatische Di- und/oder Polyisocyanate verwendet werden. Diese weisen vorzugsweise eine Viskosität von weniger als 600 mPas, besonders bevorzugt von weniger als 500 mPas und insbesondere weniger als 350 mPas, gemessen bei 25°C, auf. Als bevorzugte Isocyanate können Toluoldiisocyanat (TDI) und Diphenylmethandiisocyanat (MDI) und besonders bevorzugt Mischungen aus Diphenylmethandiisocyanat und polymerem Diphenylmethandiisocyanat (PMDI) eingesetzt werden. Diese besonders bevorzugten Isocyanate können ganz oder teilweise mit Uretdion-, Carbamat-, Isocyanurat-, Carbodiimid-, Allophanat- und bevorzugt Urethangruppen modifiziert sein.

Weiterhin können als Isocyanatkomponente Prepolymere sowie Mischungen aus den oben beschriebenen Isocyanaten und Prepolymeren eingesetzt werden. Diese Prepolymere werden aus den oben beschriebenen Isocyanaten sowie den weiter unten beschriebenen Polyethern, Polyestern oder beiden hergestellt und weisen üblicherweise einen NCO-Gehalt von 14 bis 32 Gew.-%, bevorzugt 22 bis 30 Gew.-%, auf.

Als Verbindungen mit gegenüber Isocyanaten reaktiven Gruppen (b) können alle Verbindungen eingesetzt werden, die zumindest zwei gegenüber Isocyanaten reaktive Gruppen, wie OH-, SH-, NH- und CH-acide Gruppen aufweisen. Gewöhnlich werden Polyetherole und/oder Polyesterole mit vorzugsweise 2 bis 8 mit Isocyanat reaktiven Wasserstoffatomen eingesetzt. Die OH-Zahl dieser Verbindungen liegt üblicherweise im Bereich von 30 bis 850 mg KOH /g, vorzugsweise im Bereich von 80 und 600 mg KOH/g.

Die Polyetherole werden nach bekannten Verfahren, beispielsweise durch anionische Polymerisation von Alkylenoxiden unter Zusatz mindestens eines Startermoleküls, das 2 bis 8, vorzugsweise 2 bis 6 reaktive Wasserstoffatome gebunden enthält, in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation Lewis-Säuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, eingesetzt werden.

Vorzugsweise werden als Alkylenoxide eine oder mehrere Verbindungen mit 2 bis 4 Kohlenstoffatomen im Alkylenrest, wie Tetrahydrofuran, 1,3-Propylenoxid, 1,2- bzw. 2,3-Butylenoxid, jeweils alleine oder in Form von Mischungen, und vorzugsweise Ethylenoxid und/oder 1,2-Propylenoxid eingesetzt.

Als Startermoleküle kommen beispielsweise Ethylenglycol, Diethylenglycol, Glycerin, Trimethylolpropan, Pentaerythrit, Zuckerderivate, wie Saccharose, Hexitderivate, wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht.

Die eingesetzten Polyesteralkohole werden zumeist durch Kondensation von mehrfunktionellen Alkoholen mit 2 bis 12 Kohlenstoffatomen, wie Ethylenglycol, Diethylenglycol, Butandiol, Trimethylolpropan, Glycerin oder Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure, den Isomeren von Naphthalindicarbonsäuren oder den Anhydriden der genannten Säuren, hergestellt.

Als weitere Ausgangsstoffe bei der Herstellung der Polyester können auch hydrophobe Stoffe mit verwendet werden. Bei den hydrophoben Stoffen handelt es sich um wasserunlösliche Stoffe, die einen unpolaren organischen Rest enthalten sowie über mindestens eine reaktive Gruppe, ausgewählt aus Hydroxyl, Carbonsäure, Carbonsäurester oder Mischungen daraus, verfügen. Das Äquivalentgewicht der hydrophoben Materialen liegt vorzugsweise zwischen 130 und 1000 g/mol. Verwendet werden können zum Beispiel Fettsäuren, wie Stearinsäure, Ölsäure, Palmitinsäure, Laurinsäure oder Linolsäure, sowie Fette und Öle, wie zum Beispiel Rizinusöl, Maisöl, Sonnenblumenöl, Sojabohnenöl, Kokosnussöl, Olivenöl oder Tallöl. Enthalten Polyester hydrophobe Stoffe, beträgt der Anteil der hydrophoben Stoffe am Gesamtmonomergehalt des Polyesteralkohols vorzugsweise 1 bis 30 Mol%, besonders bevorzugt 4 bis 15 Mol%.

Die eingesetzten Polyesterole haben vorzugsweise eine Funktionalität von 1,5 bis 5, besonders bevorzugt 1,8 - 3,5 und insbesondere von 1,9 bis 2,2.

Ferner enthält die Verbindung mit gegenüber Isocyanaten reaktiven Gruppen (b) bevorzugt Kettenverlängerungs- und/oder Vernetzungsmittel. Als Kettenverlängerungs-und/oder Vernetzungsmittel kommen insbesondere zwei- oder dreifunktionelle Amine und Alkohole, insbesondere Diole, Triole oder beide, jeweils mit üblicherweise Molekulargewichten kleiner als 350 g mol⁻¹, vorzugsweise von 60 bis 300 g mol⁻¹, und insbesondere 60 bis 250 g mol⁻¹ zum Einsatz. Dabei spricht man bei zweifunktionellen Verbindungen von Kettenverlängerern und bei tri- oder höherfunktionellen Verbindungen von Vernetzern. In Betracht kommen beispielsweise aliphatische, cycloaliphatische und/oder aromatische Diole mit 2 bis 14, vorzugsweise 2 bis 10 Kohlenstoffatomen, wie Ethylenglykol, 1,2-, 1,3-Propandiol, 1,2-, 1,3-Pentandiol, 1,10-Decandiol, 1,2-, 1,3-, 1,4-Dihydroxycyclohexan, Di- und Triethylenglykol, Di- und Tripropylenglykol, 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Dabei enthält die Verbindung mit gegenüber Isocyanaten reaktiven Gruppen (b) vorzugsweise ein Polyetherol (b1) mit einer Funktionalität von 4 oder größer und einer Viskosität bei 25 °C von 10000 mPas oder kleiner und ein Polyetherol (b2) mit einer Funktionalität von 3,5 oder kleiner, bevorzugt 3 oder kleiner und einer Viskosität bei 25°C von 600 mPas oder kleiner, bevorzugt 500 mPas oder kleiner. Besonders bevorzugt enthält die Verbindung mit gegenüber Isocyanaten reaktiven Gruppen (b) neben den Polyetherolen (b1) und (b2) ein Polyesterol (b3) mit einer Viskosität bei 25 °C von 2000 mPas oder kleiner und gegebenenfalls mindestens einen Kettenverlängerer (b4) und/oder einen Vernetzer (b5).

Als Komponenten (b1) bis (b5) können dabei jeweils einzelne Verbindungen oder Mischungen eingesetzt werden, wobei jede der eingesetzten Verbindungen unter die Definition von (b1) bis (b5) fällt.

Bei dem Kettenverlängerer (b4) kann es sich um Einzelverbindungen oder Mischungen handeln. Der Kettenverlängerer (b4) enthält vorzugsweise Dipropylenglycol, Tripropylenglycol und/oder 2,3-Butandiol alleine oder gegebenenfalls in Mischungen untereinander oder mit weiteren Kettenverlängerern.

In einer weiteren Ausführungsform enthalten die Verbindungen mit gegenüber Isocyanaten reaktiven Gruppen (b) neben dem Polyetherol (b1), dem Polyetherol (b2), den Polyesterol (b3) und dem Kettenverlängerer (b4) ein Vernetzungsmittel (b5). Als Vernetzungsmittel wird vorzugsweise 1,2,4-, 1,3,5-Trihydroxy-cyclohexan, Glycerin und /oder Trimethylolpropan, eingesetzt. Vorzugsweise wird als Vernetzungsmittel Glycerin eingesetzt.

Der Anteil der Komponente (b1) beträgt dabei vorzugsweise 25 bis 70 Gew.-%, besonders bevorzugt 25 bis 55 Gew.-% und insbesondere 30 bis 50 Gew.-%, bezogen auf das Gesamtgewicht der Komponente (b).

Der Anteil der Komponente (b2) beträgt dabei vorzugsweise 10 bis 40 Gew.-%, besonders bevorzugt 15 bis 35 Gew.-%, bezogen auf das Gesamtgewicht der Komponente (b).

Der Anteil der Komponente (b3) beträgt dabei vorzugsweise 15 bis 50 Gew.-%, besonders bevorzugt 20 bis 40 Gew.-%, bezogen auf das Gesamtgewicht der Komponente (b).

Der Anteil von Kettenverlängerer (b4) an der Komponente (b) beträgt vorzugsweise von 1 bis 30 Gew.-%, besonders bevorzugt von 5 bis 20 Gew.-%, bezogen auf das Gesamtgewicht der Komponente (b).

Der Anteil der Komponente (b5) an der Komponente (b) beträgt vorzugsweise 0 bis 10 Gew.-%, besonders bevorzugt 1 bis 5 Gew.-%, bezogen auf das Gesamtgewicht der Komponente (b).

Der Anteil der Polyetherole (b1), (b2), (b3), (b4) und gegebenenfalls (b5) an der Verbindung mit gegenüber Isocyanaten reaktiven Gruppen (b) beträgt vorzugsweise zumindest 80 Gew.-%, besonders bevorzugt zumindest 90 Gew.-% und insbesondere 100 Gew.-%, bezogen auf das Gesamtgewicht der Verbindung mit gegenüber Isocyanaten reaktiven Gruppen (b).

Vorzugsweise ist die Gesamtfunktionalität der Komponente (b) größer als 2,5, besonders bevorzugt größer als 2,6 und insbesondere größer als 2,75. Die mittlere OH-Zahl der Komponente (b) ist vorzugsweise größer als 300 mg KOH/g, besonders bevorzugt zwischen 350 und 1000 mg KOH/g und insbesondere zwischen 400 und 600 mg KOH/g.

Werden als Isocyanate (a) Isocyanatprepolymere eingesetzt, wird der Gehalt an Verbindungen mit gegenüber Isocyanaten reaktiven Gruppen (b), inklusive den zur Herstellung der Isocyanatprepolymere eingesetzten Verbindungen mit gegenüber Isocyanaten reaktiven Gruppen (b) berechnet.

Als Treibmittel (c) wird Treibmittel, enthaltend Wasser, eingesetzt. Dabei kann Wasser alleine oder in Kombination mit weiteren Treibmitteln eingesetzt werden. Der Gehalt an Wasser im Treibmittel (c) ist vorzugsweise größer als 40 Gew.-%, besonders bevorzugt größer als 60 Gew.-% und ganz besonders bevorzugt größer als 80 Gew.-%, bezogen auf das Gesamtgewicht des Treibmittels (c). Insbesondere wird Wasser als im Wesentlichen alleiniges Treibmittel eingesetzt. Werden neben Wasser weitere Treibmittel eingesetzt, können beispielsweise Fluorchlorkohlenwasserstoffe, Fluorkohlenwasserstoffe, Kohlenwasserstoffe, Säuren und/oder flüssiges bzw. gelöstes Kohlendioxid verwendet werden. Vorzugsweise enthalten Treibmittel (c) weniger als 50 Gew.-%, mehr bevorzugt weniger als 20 Gew.-%, besonders bevorzugt weniger als 10 Gew.-% und insbesondere 0 Gew.%, bezogen auf das Gesamtgewicht des Treibmittels (c), Fluorchlorkohlenwasserstoffe, Fluorkohlenwasserstoffe und/oder Kohlenwasserstoffe. In einer weiteren Ausführungsform kann als Treibmittel (c) eine Mischung aus Wasser und Ameisensäure und/oder Kohlendioxid eingesetzt werden. Um das Treibmittel einfacher in der Polyolkomponente dispergieren zu können, kann das Treibmittel (c) mit polaren Verbindungen, wie Dipropylenglycol, vermischt sein.

Die Treibmittel (c) werden üblicherweise in einer solchen Menge eingesetzt, dass die Dichte des harten Polyurethanschaumstoffs, der durch Reaktion der Komponenten (a) bis (e) entsteht inklusive Verstärkungsmittel im Bereich von 30 - 500, vorzugsweise 40 - 400, besonders bevorzugt 40 bis 300, insbesondere 40 bis 200 g/L liegt, bzw. 40 g/L bis 100 g/L, wie z.B. etwa 40 g/L bis 60 g/L.

Als Katalysatoren (d) können alle Verbindungen eingesetzt werden, die die Isocyanat-Wasser-Reaktion oder die Isocyanat-Polyol-Reaktion beschleunigen. Solche Verbindungen sind bekannt und beispielsweise im "Kunststoffhandbuch, Band 7, Polyurethane", Carl Hanser Verlag, 3. Auflage 1993, Kapitel 3.4.1 beschrieben. Diese umfassen aminbasierte Katalysatoren und Katalysatoren auf Basis von organischen Metallverbindungen.

Als Katalysatoren auf Basis von organischen Metallverbindungen können beispielsweise organische Zinnverbindungen, wie Zinn-(11)-salze von organischen Carbonsäuren, wie Zinn-(11)-acetat, Zinn-(11)-octoat, Zinn-(11)-ethyl-hexoat und Zinn-(11)-laurat und die Dialkylzinn-(IV)-salze von organischen Carbonsäuren, wie Dibutyl-zinndiacetat, Dibutylzinndilaurat, Dibutylzinn-maleat und Dioctylzinn-diacetat, sowie Bismutcarboxylate wie Bismut(111)-neodecanoat, Bismut-2-ethylhexanoat und Bismut-octanoat oder Alkalisalze von Carbonsäuren, wie Kaliumacetat oder Kaliumformiat eingesetzt werden.

Vorzugsweise wird als Katalysator (d) eine Mischung, enthaltend zumindest ein tertiäres Amin, eingesetzt. Bei diesen tertiären Aminen handelt es sich gewöhnlich um Verbindungen, die auch gegenüber Isocyanat reaktive Gruppen, wie OH-, NH- oder NH₂-Gruppen, tragen können. Einige der am häufigsten eingesetzten Katalysatoren sind Bis(2-Dimethyl-aminoethyl)ether, N,N,N,N,N-Pentamethyldiethylentriamin, N,N,N-Triethylamino-ethoxyethanol, Dimethylcyclohexylamin, Dimethylbenzylamin, Triethyl-amin, Triethylendiamin, Pentamethyldipropylentriamin, Dimethylethanolamin, N-Methylimidazol, N-Ethylimidazol, Tetramethylhexamethylendiamin, Tris-(Dimethylaminopropyl)hexahydrotriazin, Dimethylaminopropylamin, N-Ethylmorpholin, Diazabicycloundecen und Diazabicyclononen. Vorzugsweise werden als Katalysatoren (d) Mischungen eingesetzt, die zumindest zwei unterschiedliche tertiäre Amine enthalten. Besonders bevorzugt enthält die Katalysatormischung (d) Dimethylcyclohexylamin (d1) und Bis(2-Dimethyl-aminoethyl)ether (d2) oder Dimethylcyclohexylamin (d1) und N,N,N,N,N-Pentamethyldiethylentriamin (d3). Dabei beträgt das Verhältnis von Dimethylcyclohexylamin (d1) und Bis(2-Dimethyl-aminoethyl)ether (d2) und/oder das Verhältnis von Dimethylcyclohexylamin (d1) und N,N,N,N,N-Pentamethyldiethylentriamin (d3) vorzugsweise 0,25 bis 4 zu 1, besonders bevorzugt 0,5 bis 2 zu 1. Insbesondere bei Einsatz der erfindungsgemäßen Polyurethanverbundsystemen in abgeschlossenen Räumen, beispielsweise im Innenraum von Verkehrsmitteln, können auch alternative Katalysatoren eingesetzt werden, wodurch Emissionen reduziert werden. Solche Katalysatoren sind beispielsweise einbaubare Katalysatoren. Auch kann ganz auf Katalysatoren verzichtet werden.

Als Verstärkungsmittel können alle oben genannten Verstärkungsmittel eingesetzt werden.

Als weitere Additive (e) können Flammschutzmittel, Weichmacher, Schaumstabilisatoren, weitere Füllstoffe und sonstige Zusatzstoffe, wie Antioxidantien eingesetzt werden.

Als Flammschutzmittel können im Allgemeinen die aus dem Stand der Technik bekannten Flammschutzmittel verwendet werden. Geeignete Flammschutzmittel sind beispielsweise bromierte Ether (Ixol B 251), bromierte Alkohole, wie Dibromneopentylakohol, Tribromneopentylalkohol und PHT-4-Diol, sowie chlorierte Phosphate, wie z.B. Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat, oder Mischungen daraus.

Außer den bereits genannten halogensubstituierten Phosphaten können auch anorganische Flammschutzmittel, wie roter Phosphor, roten Phosphor enthaltende Zusammensetzungen, expandierbarer Graphit (Blähgraphit), Aluminiumoxidhydrat, Antimontrioxid, Arsenoxid, Ammoniumpolyphosphat und Calciumsulfat oder Cyanursäurederivate, wie Melamin, oder Mischungen aus mindestens zwei Flammschutzmitteln, wie Ammoniumpolyphosphaten und Melamin sowie gegebenenfalls Stärke, zum Flammfestmachen der erfindungsgemäß hergestellten PolyurethanHartschaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel werden im Rahmen der vorliegenden Erfindung bevorzugt in einer Menge von 0 bis 25 Gew.-%, insbesondere 5 bis 15 Gew.-% bezogen auf das Gesamtgewicht der Komponenten (b) bis (e) verwendet.

Als Schaumstabilisatoren werden Stoffe bezeichnet, welche die Ausbildung einer regelmäßigen Zellstruktur bei der Schaumbildung fördern. Beispielsweise sind genannt: Siliconhaltige Schaumstabilisatoren, wie Siloxan-Oxalkylen-Mischpolymerisate und andere Organopolysiloxane. Ferner Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A oder Mischungen aus zwei oder mehreren dieser Schaumstabilisatoren.

Schaumstabilisatoren werden bevorzugt in einer Menge von 0,5 bis 4 Gew.-%, besonders bevorzugt 1 bis 3 Gew.-%, bezogen auf das Gesamtgewicht der Komponenten (b) bis (e), verwendet.

Als weitere Füllstoffe, insbesondere verstärkend wirkende Füllstoffe, sind die an sich bekannten, üblichen organischen und anorganischen Füllstoffe, Verstärkungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas und andere. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Verwendet werden können auch Glasmikrohohlkugeln. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstoffasern.

Die weiteren, insbesondere anorganischen und organischen Füllstoffe können einzeln oder als Gemische verwendet werden und werden der Reaktionsmischung vorteilhafterweise in Mengen von 0,5 bis 30 Gew.%, vorzugsweise 1 bis 15 Gew.%, bezogen auf das Gewicht der Komponenten (a) bis (e), zugegeben.

Die vorliegende Erfindung betrifft auch ein Verfahren zur Herstellung eines Sportgeräts, insbesondere eines Sportgeräts wie oben beschrieben, wobei man einen Polyurethanhartschaumstoff, enthaltend ein poröses dreidimensionales Verstärkungsmittel, das ein Netzwerk ausbildet, wobei das Netzwerk mindestens 50 % des Volumens des Polyurethanhartschaumstoffs umschließt oder mindestens eine Lage eines porösen, mindestens zweidimensionalen Verstärkungsmittels, vorgelegt wird und mit einem kompakten Polyurethan oder einem kompakten Polyharnstoff beschichtet wird. Vorzugsweise wird der Polyurethanhartschaumstoff durch Vorlegen des Verstärkungsmittels, insbesondere eines Verstärkungsmittels wie oben ausgeführt, in einer geeigneten Form, die beispielsweise die Oberfläche des gewünschten Sportgeräts, vorzugsweise eines Tennisschlägers oder Surfbretts, nachbildet, Zugabe einer Reaktionsmischung, insbesondere einer Reaktionsmischung zur Herstellung des Polyurethanhartschaumstoffs wie oben definiert, und Aushärten hergestellt. Anschließend wird vorzugsweise der Polyurethanhartschaumstoff durch Aufsprühen einer Reaktionsmischung zur Herstellung eines kompakten Polyurethans oder eines kompakten Polyharnstoffs, insbesondere wie unten beschrieben, auf den Polyurethanhartschaumstoff beschichtet.

Vorzugsweise erfolgt die Herstellung des Polyurethanhartschaumstoffs kontinuierlich auf einem Band oder diskontinuierlich in einer Form als Blockschaum. Dazu werden vorzugsweise die Komponenten (b) bis (d) und gegebenenfalls (e) zu einer Polyolkomponente vermischt. Diese werden anschließend vorzugsweise in einer Niederdruckmischvorrichtung, einer Hochdruckmischvorrichtung bei vermindertem Druck von kleiner 100 bar oder einer Hochdruckmaschine mit der Isocyanat-Komponente (a) vermischt. Alternativ können auch die Komponenten (a) bis (d) und gegebenenfalls (e) jeweils einzeln in die Mischvorrichtung gegeben werden. Anschließend wird die so erhaltene Reaktionsmischung auf das Verstärkungsmittel, vorzugsweise auf die Glasfasermatten oder Glasfaserzopfgelege gegeben, die vorzugsweise von mehreren Trommeln kontinuierlich auf das Band abgerollt werden oder auf dem Boden einer Form vorgelegt werden, und dort gegebenenfalls eine entsprechende Anzahl an Lagen bilden. Anschließend wird der erhaltene Schaum vorzugsweise auf dem Band oder in der Form soweit ausgehärtet, dass dieser ohne Beschädigung in Stücke geschnitten werden kann. Dies kann bei Raumtemperatur (20°C) oder bei erhöhten Temperaturen, vorzugsweise etwa 60°C bis etwa 120°C, insbesondere etwa 70°C bis etwa 90°C, beispielsweise beim Durchlauf durch einen Ofen im Falle einer kontinuierlichen Produktion oder durch die Verwendung von beheizbaren Formen im Falle von diskontinuierlicher Produktion, erfolgen. Vorzugsweise werden Racketsportgeräte bei Raumtemperatur und Wassersportgeräte bei erhöhter Temperatur ausgehärtet. Die erhaltenen Schaumstücke werden dann vorzugsweise weiter gelagert, um die volle mechanische Belastbarkeit zu erhalten. Die Anzahl der verwendeten Glasfasermatten ist frei wählbar und hängt ab von dem gewünschten Glasfaseranteil im Schaum und von der eingestellten Schäumhöhe, über die sich die Matten homogen verteilen. Für eine Schaumhöhe von 20-25 cm sind beispielweise 3 bis 10 Mattenlagen einer Mattendichte von etwa 450 g/m² bevorzugt, insbesondere 5-8 Mattenlagen.

Isocyanate (a) und Verbindungen mit gegenüber Isocyanat reaktiven Gruppen (b), Treibmittel, enthaltend Wasser (c), Katalysatoren (d) und gegebenenfalls weitere Additive (e) werden vorzugsweise in solchen Mengen zur Umsetzung gebracht, dass der Isocyanatindex im Bereich von 100 bis 400, bevorzugt 100 - 200, besonders bevorzugt 100 - 150 liegt.

Dabei wird unter Isocyanatindex im Rahmen der vorliegenden Erfindung das stöchiometrische Verhältnis von Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Besonders vorteilhaft ist, dass die Reaktionsmischungen zur Herstellung des Polyurethanhartschaums wie oben beschrieben schnell in die Verstärkungsmittel eindringen und dadurch eine gleichmäßige und möglichst raumfüllende Verteilung der Verstärkungsmittel im erhaltenen Polyurethanhartschaumstoff begünstigt wird. Ebenfalls vorteilhaft ist die lange Startzeit der Reaktionsmischungen zur Herstellung des Polyurethanhartschaums wie oben beschrieben bei kurzer Reaktionszeit. Weiterhin ist von Vorteil, dass die Reaktionsmischungen zur Herstellung des Polyurethanhartschaums wie oben beschrieben eine niedrige Viskosität und gutes Fließverhalten aufweisen, um großflächige Formen bzw. komplexe Volumen bis in die Ecken auszufüllen.

Erfindungsgemäße verstärkte und insbesondere beschichtete Polyurethanhartschaumstoffe sind mechanisch stabil, weisen eine geringe Wärmeleitfähigkeit auf, zeigen hervorragende Schaumeigenschaften, beispielsweise ohne Löcher und Risse, haben gute mechanische Eigenschaften, wie Druck- und Schlagfestigkeiten und ein hervorragendes Druck-E-Modul und weisen eine gleichmäßige Verteilung der Schichten von Verstärkungsmitteln auf. Auch zeigen die erfindungsgemäßen Sportgeräte ausgezeichnete UV-Beständigkeit. Dabei werden die Druckfestigkeit und das Druck-E-Modul sowohl senkrecht als auch parallel zur Schäumrichtung (in x/y- und z-Richtung) gemäß DIN 53421 / DIN EN ISO 604 gemessen. Die räumlich gemittelte Druckfestigkeit und das Druck-E-Modul kann gemäß (x*y*z)^{1/3} berechnet werden. Die Biegefestigkeit wird an Probekörpern von 120 mm x 25 mm x 20 mm gemäß DIN 53423 bei 25 °C bestimmt; gemessen wird die Biegefestigkeit der Schaumebene senkrecht zur Schäumrichtung. Der Polyurethanhartschaumstoff kann als Block hergestellt und aus dem Block Schaumkörper für die speziellen Anwendungen zugeschnitten oder gefräst werden. Insbesondere können aus einem größeren Schaumblock mehr als ein Schaumkörper gewonnen werden. So sind beliebig komplexe Schaumkörperformen leicht möglich als auch eine Individuelle Fertigung von Kleinserien oder Einzelstücken des erfindungsgemäßen Sportgeräts möglich

Der Polyurethanhartschaumstoff wird mit einem Beschichtungsmittel zur Herstellung eines kompakten Polyurethans, eines kompakten Polyharnstoffs oder eines Polyurethan-Polyharnstoff-Hybridsystems beschichtet. Dabei können in dem Beschichtungsmittel als kompaktes Polyurethan oder als kompakter Polyharnstoff jedes Reaktionsprodukt eingesetzt werden, das durch Reaktion von mindestens einer Verbindung mit mindestens zwei Isocyanatgruppen und einer Verbindung mit mindestens zwei gegenüber Isocyanaten reaktiven Gruppen erhalten wird und im Wesentlichen frei von Gaseinschlüssen ist. Vorzugsweise ist die Dichte eines kompakten Polyurethans oder eines kompakten Polyharnstoffs größer 0,8 g/cm³, besonders bevorzugt größer 0,9 g/cm³ und insbesondere größer 1,0 g/cm³. Dabei werden unter ,,Polyurethan" Verbindungen verstanden die erhältlich sind, wenn die reaktiven Gruppen der Verbindung mit mindestens zwei gegenüber Isocyanaten reaktiven Gruppen überwiegend Hydroxylgruppen sind und unter Polyharnstoff werden Verbindungen verstanden, die erhältlich sind, wenn die reaktiven Gruppen der Verbindung mit mindestens zwei gegenüber Isocyanaten reaktiven Gruppen überwiegend primäre oder sekundäre Amingruppen sind. Die Amine werden dabei häufig zusammen mit weiteren Hilfs- und Zusatzstoffen in Form einer Aminkomponente mit dem Isocyanat umgesetzt. Vorzugsweise ist das Beschichtungsmittel ein kompakter Polyharnstoff, der durch Vermischen von Verbindungen mit mindestens zwei Isocyanatgruppen mit Verbindungen mit mindestens zwei primären oder sekundären Aminen erhältlich ist.

Vorzugsweise erfolgt das Beschichten des Polyurethanhartschaumstoffs im Gieß- oder Sprühverfahren, besonders bevorzugt im Sprühverfahren, bei dem der Polyurethanhartschaumstoff mit dem Beschichtungsmittel zur Herstellung der Beschichtung besprüht wird. Gegebenenfalls kann das Polyurethanverbundsystem auch in einer Form hergestellt werden. Dazu wird die innere Wand der Form ganz oder teilweise mit der Reaktionsmischung zur Herstellung der Beschichtung besprüht und anschließend das Verstärkungsmittel und die Reaktionsmischung zur Herstellung des Polyurethanhartschaumstoffs in die Form gegeben und ausreagieren lassen. Die vorliegende Erfindung betrifft somit auch ein Verfahren zur Herstellung eines Sportgeräts, insbesondere eines Sportgeräts wie oben ausgeführt, in den das Beschichtungsmittel zur Herstellung eines kompakten Polyurethans oder eines kompakten Polyharnstoffs auf Teile oder die gesamte innere Oberfläche einer Form gesprüht wird und anschließend das Verstärkungsmittel in der Form vorgelegt wird und die Reaktionsmischung zur Herstellung des Polyurethanhartschaumstoffs, insbesondere eine Reaktionsmischung wie oben definiert, zugegeben wird, und der Schaumstoff ausgehärtet wird, insbesondere bei Raumtemperatur oder erhöhten Temperaturen wie oben ausgeführt. Erfindungsgemäß können alle bekannten Polyurethan- oder Polyharnstoff-Sprühsysteme eingesetzt werden. Solche sind beispielsweise bekannt aus Becker / Braun, Kunststoffhandbuch Nr.7, Polyurethane, Kap. 10. In DE102004022683 werden ausführlich Polyharnstoffsprühsysteme beschrieben. Vorzugsweise werden kompakte Polyharnstoffe zum Beschichten des Polyurethanhartschaumstoffs eingesetzt.

Zur Herstellung von kompakten Polyurethanstoffen oder Polyharnstoffen können als Verbindungen mit mindestens zwei Isocyanatgruppen beispielsweise alle unter (a) beschriebenen Isocyanate eingesetzt werden. Vorzugsweise werden als Verbindungen mit mindestens zwei Isocyanatgruppen Prepolymere basierend auf ein Isomer oder Isomergemisch des Diphenylmethandiisocyanat (MDI) und Polyetherolen, zum Beispiel Polypropylenglykolen, eingesetzt. Die Herstellung dieser Isocyanatprepolymere erfolgt durch Umsetzung von insbesondere hydroxyl-, ferner auch aminterminierten Polyethylenbeziehungsweise Polypropylenoxiden mit dem Polyisocyanat. Bevorzugt haben die verwendeten Prepolymere einen Isocyanatgehalt von 10-25 Gewichtsprozent, besonders bevorzugt 15-20 Gewichtsprozent und eine Viskosität bei 25°C von maximal 2000 mPas, insbesondere zwischen 300-1000 mPas.

Die Aminkomponente ist üblicherweise ein Gemisch aus primären aliphatischen Polyetheraminen und in der Regel aromatischen aminischen Kettenverlängerern.

Hauptbestandteil der Aminkomponente einer Polyharnstoffformulierung ist eine Mischung von Polyetheraminen, d.h. von aminterminierten di- beziehungsweise höherfunktionellen Polyethylen- beziehungsweise Polypropylenoxiden mit Molekulargewichten zwischen 200 und 5000 g mol⁻¹. Die aliphatischen Amine reagieren schneller als die aromatischen Komponenten der Kettenverlängerer und dienen vorwiegend dem Aufbau der Weichphase der Polyharnstoff-Sprühelastomere.

Der in der Polyharnstoffformulierung üblicherweise verwendete Kettenverlängerer ist Diethylentoluoldiamin (DETDA). Als im Vergleich zu aliphatischen Aminen unreaktivere Komponente determiniert DETDA das Aushärteverhalten des Systems. Um lichtstabile Polyharnstoffe zu synthetisieren, werden auch aliphatische Kettenverlängerer eingesetzt. Die zumeist aromatischen Kettenverlängerer werden vorwiegend in die Hartphase der Polyharnstoff-Sprühelastomere eingebaut. Desweiteren kann die Polyharnstoffformulierung weitere Additive und Zusatzstoffe, wie oben bei der Beschreibung der Komponente (e) ausgeführt, enthalten, insbesondere die beschriebenen Flammschutzmittel sowie Entschäumungsmittel und/oder wasserabsorbierende Zusätze wie zum Beispiel Zeolite.

In einer weiteren erfindungsgemäßen Ausführung des Sportgeräts kann die Beschichtung Kurzfasern einer Länge bis zu 2 cm, vorzugsweise etwas 0,6-2 cm enthalten. Die Fasern werden üblicherweise getrennt gelagert und gleichzeitig mit dem Beschichtungsmittel aufgesprüht oder alternativ zuvor in einer oder mehreren Komponenten des Beschichtungsmittels suspendiert.

Die Beschichtung erfolgt üblicherweise auf mindestens 30 %, bevorzugt mindestens 50 %, besonders bevorzugt mindestens 80 % und insbesondere auf 100% der Oberfläche des Poiyurethanhartschaumstoffs. Besonders bevorzugt werden alle sichtbaren Oberflächen des erfindngsgemäßen Sportgeräts enthaltend das Polyurethanverbundsystem beschichtet, bei Wassersportgeräten insbesondere alle mit Wasser in Kontakt kommenden Oberflächen des Geräts.

Nach der Beschichtung mit dem kompakten Polyurethan oder Polyharnstoff kann das Polyurethanverbundsystem beispielsweise mit dekorativen Beschichtungen weiter beschichtet werden. So kann beispielsweise ein dekorativen Anstrich erfolgen. Weiter kann auch eine ganz- oder teilweise Beschichtung mit einer funktionellen Beschichtung, beispielsweise einer anti-Rutsch-Beschichtung erfolgen. Schließlich erfolgen noch typische Ergänzungen und Anbauten an dem Sportgerät, wie z.B. Halteschlaufen, Bohrungen o.ä., bei Wassersportgeräten bzw. Bespannungen oder Montage des Griffes bei Racketsportgeräten.

Erfindungsgemäße Sportgeräte enthaltend das Polyurethanverbundsystem weisen neben einem geringen Gewicht eine ausgezeichnete Druckfestigkeit, Biegefestigkeit, Steifigkeit, Schlagzähigkeit und Oberflächengüte auf. Weiter weisen diese hervorragende Wärmeisolationseigenschaften und UV-Beständigkeit auf. Die Polyurethanverbundsysteme können beispielsweise bei der Herstellung von Sportgeräten, insbesondere Wassersportgeräten, wie Surfbrettern, Windsurfbrettern, Kiteboards, Wakeboards und Wasserski oder Racketsportgeräten, wie Tennisschläger, Badmintonschlägern, Racketballschlägern, Squashschlägern und Paddleschlägern eingesetzt werden. Insbesondere Surfbretter (Wellenreitbretter), Windsurfbretter und Kiteboards (Wind-Kite-Bretter), die eine geringe Materialdichte und damit hohen Auftrieb im Wasser sowie gleichzeitig eine hohe Gesamthärte, Oberflächenhärte, Steifigkeit, Schlagfestigkeit und Biegefestigkeit besitzen, lassen sich mit dem Polyurethanverbundsystem herstellen.

Die Erfindung betrifft somit auch die Verwendung eines Polyurethanverbundsystems wie oben beschrieben, enthaltend einen Poiyurethanhartschaumstoff und ein Beschichtungsmittel aus einem kompakten Polyurethan oder einem kompakten Polyharnstoff, wobei der Polyurethanhartschaumstoff ein poröses dreidimensionales Verstärkungsmittel enthält, das ein Netzwerk ausbildet, wobei das Netzwerk mindestens 50 % des Volumens des Polyurethanhartschaumstoffs umschließt oder mindestens zwei Lagen eines porösen, mindestens zweidimensionalen Verstärkungsmittels enthält, in einem Sportgerät, insbesondere einem Wassersportgerät, wie einem Surfbrett, Windsurfbrett, Kiteboard, Wakeboard oder Wasserski, oder einem Racketsportgerät, wie einem Tennisschläger, Badmintonschläger, Racketballschläger, Squashschläger oder Paddleschläger.

Anhand von Beispielen sollen die Vorteile der Erfindung erläutert werden:

Allgemeine Anweisung zur Herstellung von Polyurethanverbundsystemen, wie sie in den erfindungsgemäßen Sportgeräten eingesetzt werden können:

Zur Herstellung des Hartschaums 1, des Polyurethanverbundsystems 2 und des Vergleichsbeispiels V1 wurden die verwendeten Polyole gemäß Tabelle 1 mit Katalysatoren, Stabilisator und Treibmittel verrührt, anschließend mit dem Isocyanat vermischt und das Reaktionsgemisch in eine Box mit einer Grundfläche von 225 mm x 225 mm gegossen und dort verschäumt. Zur Herstellung der verstärkten Hartschaumstoffe, wurde das Reaktionsgemisch in die gleiche Box gegeben, die nun aber mehrere Lagen Glasfasermatten des Typs Unifilo U809-450 enthielten. Das Reaktionsgemisch drang in die Matten ein und mit dem in der Box aufsteigenden Schaum quellten die Matten auf und verteilten sich homogen über die gesamte Schaumhöhe. Durch das Treibmittel wurde eine konstante Schaumrohdichte von 45 g/L eingestellt. Die Beschichtung des Hartschaumstoffs mit einer 1 mm dicken Schicht wurde mit dem Polyharnstoff-Sprühsystem Coating 1 aus Tabelle 2 durchgeführt.

Druckfestigkeit und Druck-E-Modul wurden parallel zur Schäumrichtung gemäß DIN 53421 bei 25°C gemessen. Die Oberflächenhärte wurde mit einem Tiratest 2602 Gerät mit einer Kugelkalotte mit einem Durchmesser von 20mm bei 25°C gemessen. Dabei wird die benötigte Kraft gemessen, um die Kalotte 10 mm in den Prüfkörper parallel zur Schäumrichtung einzudrücken.

**Tabelle 1**

| Beispiel | 1 (Vergleich) | 2 | V1 | V2 | V3 |
|---|---|---|---|---|---|
| Polyol 1 | 30 | 30 | 30 | 30 | 30 |
| Polyol 2 | 20 | 20 | 20 | 20 | 20 |
| Polyol 3 | 30 | 30 | 30 | 30 | 30 |
| Dipropylenglykol | 18 | 18 | 18 | 18 | 18 |
| Schaumstabilisator | 2 | 2 | 2 | 2 | 2 |
| Wasser | 1,8 | 1,8 | 1,8 | 1,8 | 1,8 |
| Ameisensäure | 1,8 | 1,8 | 1,8 | 1,8 | 1,8 |
| Dimethylcyclohexylamin | 0,3 | 0,3 | 0,3 | 0,3 | 0,3 |
| Gewichtsanteil Glasfasermatten | 10% | 10% | 0% | 0% | 0% |
| Gewichtsanteil Kurzfasern (5cm) | 0% | 0% | 0% | 10% | 10% |
| Isocyanat | 172 | 172 | 172 | 172 | 172 |
| Beschichtung mit Coating 1 | Nein | Ja | Nein | Nein | Ja |
| Druckfestigkeit [MPa] | 0,27 | 0,32 | 0,22 | n.b. | n.b. |
| Druck-E-Modul [MPa] | 8,9 | 9,1 | 5,0 | n.b. | n.b. |
| Oberflächenhärte [N] | 290 | 570 | 170 | 200 | 500 |
| Biegefestigkeit [MPa] | 0,56 | n.b. | n.b. | n.b. | 0,3 |

**Tabelle 2**

| | |
|---|---|
| Polyetheramin, MW 2000 | 60 |
| Polyetheramin, MW 400 | 20 |
| Diethylentoluoldiamin | 20 |
| Prepolymer MDI-basiert, NCO-gehalt 15% | 112 |

Dabei wurden folgende Einsatzstoffe verwendet:
Polyol 1: zuckerbasiertes Polyetherol, OH-Zahl = 500 mg KOH/g, Viskosität = 8000 mPas
Polyol 2: Glycerinbasiertes Polyetherol, OH-Zahl = 400 mg KOH/g, Viskosität = 350 mPas
Polyol 3: Phthalsäureanhydrid/Diethylenglykol-basiertes Polyesterol, OH-Zahl = 300 mg KOH/g, Viskosität = 1000 mPas
Isocyanat: polymeres Methylendiphenyldiisocyanat (PMDI), Viskosität = 200 mPas
die Viskositätsangaben beziehen sich jeweils auf die Viskosität bei 25 °C.
Stabilisator: Silikonhaltiger Schaumstabilisator der Evonik Goldschmidt GmbH

Tabelle 1 zeigt, dass die erhaltenen harten Polyurethanverbundsysteme hohe Druckfestigkeiten, insbesondere Oberflächenhärte und hohe Druck-E-Module aufweisen.

### Beispiel 1: Tennisschläger

Zur Herstellung eines erfindungsgemäßen Tennisschlägers wird im ersten Schritt die Metallform (Negativform des Schlägers) mit einer Schichtdicke von ca. 1 bis 2 mm des glasfaserverstärkten Polyharnstoffs beschichtet. Dazu werden in beide Hälften der Metallform jeweils ein unidirektionales Glasfilamentgewebe mit einem Gewicht von 425 g/m² mittles eines Haftvermittlers (z.B. weiches Harz) fixiert und anschließend mit dem Polyharnstoff mittels Bestreichen oder Besprühen durchtränkt. Der Polyharnstoff härtet einstellungsgemäß in ca. 30 Sekunden aus. Daraufhin wird in eine Hälte der Metallform ein Glasfaserzopfgelege eingelegt und die Reaktionsmischung zur Herstellung des Polyurethanhartschaums darübergegossen. Anschließend wird die andere Hälfte der Metallform aufgesetzt, die Form fest geschlossen und auf ca. 80°C für 5 Minuten erhitzt. Der resultierende Schläger hat je nach Geometrie ein Gewicht von 230-360 Gramm und ist hinsichtlich der Rahmensteifigkeit und Spielbarkeit zu einem herkömmlich konstruierten Schläger vergleichbar. Die Herstellungskosten der erfindungsgemäßen Bauweise betragen ca. 60 % der herkömmlichen Herstellungsweise.

### Beispiel 2: Surfbrett

Zur Herstellung eines erfindungsgemäßen Surfbretts wird im ersten Schritt in einem herkömmlichen Rohlingsformwerkzeug für Surfbretter aus dem verstärkten Polyurethanschaumstoff der Schaumvorförmling, der im Englischen sogenannte "blank", hergestellt. Hierzu wird ein auf die Surfbrettgeometrie zugeschnittenes mehrschichtiges Glasfilamentgelege in das Werkzeug eingelegt und mit der Reaktionsmischung zur Herstellung des Polyurethanschaumstoffs, die auf eine Zieldichte des Polyurethanhartschaumstoffs von ca. 50 kg/m³ eingestellt ist, übergossen. Die Reaktionsmischung ist in diesem Fall ein bei Raumtemperatur härtendes System. Es kann gegebenenfalls ein sogenannter Stringer (Holzverstärkung in axialer Richtung) in dem Vorförmling zusätzlich eingeklebt werden. Der Schaumvorförmling wird nun mittels CNC-Fräse in die gewünschte Form gefräst, Details werden bei Bedarf mit der Hand noch beigeschliffen. Der nun fertige "blank" wird nun mit dem durch Glasfaser verstärkten Polyharnstoff beschichtet.

Hierzu wird erst in einem Sprühverfahren mit zwei Düsen der Polyharnstoffverbund aufgebracht, indem aus einer Düse eine Langglasfaser mit einer Länge von ca. 0,6-2 cm auf das "blank" gesprüht und gleichzeitig aus der zweiten Düse der Polyharnstoff zugesprüht wird, wodurch auf dem "blank" ein fertiger Verbund entsteht, der systembedingt binnen weniger Sekunden aushärtet. Daraufhin wird mit dem Polyharnstoff eine weitere Schicht aufgesprüht, um eine glatte und homogene Oberflächenstruktur zu erhalten.

Das erfindungsgemäß hergestellte Surfbrett weist eine deutlich verbesserte Schlagzähigkeit bei gleicher Dichte und verbesserte mechanische Eigenschaften im Gegensatz zu einem herkömmlichen polyesterlaminierten Surfbrett auf. Die Herstellungskosten der errfindungsgemäßen Bauweise betragen ca. 60 % der herkömmlichen Herstellungsweise.

## Patentansprüche

1. Sportgerät, enthaltend ein Polyurethanverbundsystem, enthaltend einen Polyurethanhartschaumstoff und ein Beschichtungsmittel aus einem kompakten Polyurethan oder einem kompakten Polyharnstoff, wobei der Polyurethanhartschaumstoff ein poröses dreidimensionales Verstärkungsmittel, das ein Netzwerk ausbildet, wobei das Netzwerk mindestens 50 % des Volumens des Polyurethanhartschaumstoffs umschließt, oder mindestens zwei Lagen eines porösen, mindestens zweidimensionalen Verstärkungsmittels enthält.

2. Sportgerät nach Anspruch 1, wobei es sich um ein Wassersportgerät, insbesondere um ein Surfbrett, oder ein Racketsportgerät, insbesondere einen Tennisschläger, handelt.

3. Sportgerät nach Anspruch 1 oder 2, **dadurch gekennzeichnet, dass** das Verstärkungsmittel Glasfasermatten umfasst.

4. Sportgerät nach einem der Ansprüche 1 bis 3, **dadurch gekennzeichnet, dass** die Lagen des flächigen Verstärkungsmittels homogen im Polyurethanhartschaumstoff verteilt sind.

5. Sportgerät nach einem der Ansprüche 1 bis 4, **dadurch gekennzeichnet, dass** der Polyurethanhartschaumstoff herstellbar ist durch Vermischen von
a) Polyisocyanaten
b) Verbindungen mit gegenüber Isocyanaten reaktiven Gruppen
c) Treibmittel, enthaltend Wasser,
d) einer Katalysatormischung, enthaltend tertiäre Amine und gegebenenfalls
e) weiteren Additiven,
so dass eine Reaktionsmischung erhalten wird, Auftragen der Reaktionsmischung auf ein Verstärkungsmittel und Aushärten der Reaktionsmischung.

6. Sportgerät nach Anspruch 5, **dadurch gekennzeichnet, dass** die Verbindungen mit gegenüber Isocyanaten reaktiven Gruppen (b) ein Polyetherol (b1) mit einer Funktionalität von 4 oder größer und einer Viskosität bei 25 °C von 10000 mPas oder kleiner und ein Polyetherol (b2) mit einer Funktionalität von 3,5 oder kleiner und einer Viskosität bei 25°C von 600 mPas oder kleiner, enthalten.

7. Sportgerät nach Anspruch 6, **dadurch gekennzeichnet, dass** die Verbindungen mit gegenüber Isocyanaten reaktiven Gruppen (b) neben dem Polyetherol (b1) und dem Polyetherol (b2) ein Polyesterol (b3) mit einer Viskosität bei 25 °C von 2000 mPas oder kleiner, und gegebenenfalls mindestens einen Kettenverlängerer (b4) und/oder einen Vernetzer (b5) enthalten.

8. Sportgerät nach einem der Ansprüche 1 bis 7, **dadurch gekennzeichnet, dass** der Polyurethanhartschaumstoff als Isocyanatkomponente PMDI enthält.

9. Sportgerät nach einem der Ansprüche 1 bis 8, **dadurch gekennzeichnet, dass** der Poiyurethanhartschaumstoff eine Dichte von 30 g/L bis 500 g/L aufweist.

10. Sportgerät nach einem der Ansprüche 1 bis 9, **dadurch gekennzeichnet, dass** der Poiyurethanhartschaumstoff eine dichteunabhängige Druckfestigkeit von mindestens 5*10⁻⁴ MPa*(L/g)^{1,6}, bevorzugt mindestens 5,5*10⁻⁴ MPa*(L/g)^{1,6} aufweist.

11. Sportgerät nach einem der Ansprüche 1 bis 9, **dadurch gekennzeichnet, dass** der Polyurethanhartschaumstoff ein dichteunabhängiges Druck-E-Modul von mindestens 8*10⁻³ MPa*(L/g)^{1,7}, bevorzugt mindestens 9,5*10⁻³ MPa*(L/g)^{1,7} aufweist.

12. Verfahren zur Herstellung eines Sportgeräts, insbesondere eines Wassersportgeräts oder Racketsportgeräts, **dadurch gekennzeichnet, dass** man einen Polyurethanhartschaumstoff, enthaltend ein poröses dreidimensionales Verstärkungsmittel, das ein Netzwerk ausbildet, wobei das Netzwerk mindestens 50 % des Volumens des Polyurethanhartschaumstoffs umschließt oder mindestens eine Lage eines porösen, mindestens zweidimensionalen Verstärkungsmittels vorlegt, und den Polyurethanhartschaumstoff mit einem kompakten Polyurethan oder einem kompakten Polyharnstoff beschichtet.

13. Verfahren nach Anspruch 12 **dadurch gekennzeichnet, dass** man den Polyurethanhartschaumstoff, enthaltend ein poröses dreidimensionales Verstärkungsmittel, das ein Netzwerk ausbildet, wobei das Netzwerk mindestens 50 % des Volumens des Polyurethanhartschaumstoffs umschließt oder mindestens eine Lage eines porösen, mindestens zweidimensionalen Verstärkungsmittels durch Vorlegen des Verstärkungsmittels in einer Form, Zugabe einer Reaktionsmischung, wie sie in einem der Ansprüche 5 bis 8 definiert ist, und Aushärten herstellt und den Poiyurethanhartschaumstoff durch Aufsprühen eines Beschichtungsmittels zur Herstellung eines kompakten Polyurethans oder eines kompakten Polyharnstoffs auf den Polyurethanhartschaumstoff beschichtet.

14. Verfahren zur Herstellung eines Sportgeräts, insbesondere eines Wassersportgeräts oder Racketsportgeräts, **dadurch gekennzeichnet, dass** man ein Beschichtungsmittel zur Herstellung eines kompakten Polyurethans oder eines kompakten Polyharnstoffs auf Teile oder die gesamte innere Oberfläche einer Form sprüht und anschließend ein Verstärkungsmittel und eine Reaktionsmischung zur Herstellung eines Polyurethanhartschaumstoffs in die Form gibt und ausreagieren lässt.

15. Verwendung eines Polyurethanverbundsystems, enthaltend einen Polyurethanhartschaumstoff und ein Beschichtungsmittel aus einem kompakten Polyurethan oder einem kompakten Polyharnstoff, wobei der Polyurethanhartschaumstoff ein poröses dreidimensionales Verstärkungsmittel enthält, das ein Netzwerk ausbildet, wobei das Netzwerk mindestens 50 % des Volumens des Polyurethanhartschaumstoffs umschließt oder mindestens zwei Lagen eines porösen, mindestens zweidimensionalen Verstärkungsmittels enthält, in einem Sportgerät, vorzugsweise einem Wassersportgerät, insbesondere einem Surfbrett oder einem Racketsportgerät, insbesondere einem Tennisschläger.
